# EUROPÄISCHE PATENTSCHRIFT

(11) **EP 1 992 149 B1**
(45) Veröffentlichungstag und Bekanntmachung des Hinweises auf die Patenterteilung: **01.07.2009**
(21) Anmeldenummer: 07721979.8
(22) Anmeldetag: 05.03.2007
(51) Int. Cl.: H04M 1/60, H04M 1/2745

(54) **FREISPRECHELEKTRONIK UND VERFAHREN ZUM BETRIEB EINER FREISPRECHELEKTRONIK**
HANDS-FREE ELECTRONIC DEVICE, AND METHOD FOR THE OPERATION OF A HANDS-FREE ELECTRONIC DEVICE
DISPOSITIF ÉLECTRONIQUE MAINS LIBRES, ET PROCÉDÉ PERMETTANT DE FAIRE FONCTIONNER UN TEL DISPOSITIF

(30) Priorität: 08.03.2006 DE 102006011121
(43) Veröffentlichungstag der Anmeldung: 19.11.2008
(73) Patentinhaber: Peiker Acustic GmbH & Co. KG, 61381 Friedrichsdorf/Ts (DE)
(72) Erfinder: GIESE, Markus, 57462 Olpe (DE); HILLE, Jan, 57072 Siegen (DE); SCHILLO, Christoph, 71034 Böblingen (DE); SCHUMACHER, Gero, 71263 Weil der Stadt (DE)
(74) Vertreter: Otten, Herbert
(86) Internationale Anmeldenummer: PCT/DE2007/000404
(87) Internationale Veröffentlichungsnummer: WO 2007/104279

(56) Entgegenhaltungen:
- WO-A-20/05046190
- DE-A1-9102004 032 85
- US-A1- 2005 143 134

## Beschreibung

Die Erfindung betrifft eine Freisprechelektronik und ein Verfahren zum Betrieb einer Freisprechelektronik gemäß dem Oberbegriff des Anspruchs 1 bzw. 15.

Bei Freisprechelektroniken, welche mit einem Mobiltelefon zusammenarbeiten besteht das Problem, dass diese bei Verwendung üblicher Datenaustauschprofile wie zum Beispiel dem sogenannten HANDSFREE-Profil, PHONEBOOK-ACCESS-Profil oder dem sogenannten SIM-ACCESS-Profil in dem Mobiltelefon allenfalls Zugriff auf Rufnummernlisten mit Rufnummern haben, welche auf der SIM-Karte gespeichert sind. Auf Rufnummernlisten, welche in einem internen Telefonbuch eines Mobiltelefons gespeichert sind, ist der Zugriff auch aus Sicherheitsgründen nicht möglich. Somit steht dem Nutzer bei der Verwendung seines Mobiltelefons im Fahrzeug zusammen mit einer Freisprechelektronik keine Rufnummernliste aus seinem Mobiltelefon zur Verfügung, welche der Nutzer über Schnittstellen der Freisprechelektronik wie zum Beispiel Touchscreen, Display oder Tastatur nutzen kann. Weiterhin unterscheiden sich die Personengruppe, mit welcher aus dem Fahrzeug telefoniert wird, in der Regel von der Personengruppe, mit welcher von außerhalb des Fahrzeugs telefoniert wird. Insofern ist hier eine im Mobiltelefon vorhandene Rufnummernliste nicht unbedingt optimal aufgebaut.

Der Stand der Technik ist offenbart, durch die Dokumente D1-DE 10 2004 032 859 und D2-US 2005/0 143 134.

Der Erfindung liegt die Aufgabe zugrunde eine Freisprechelektronik bzw. ein Verfahren zum Betrieb einer Freisprechelektronik zu entwickeln, welche bzw. welches es ermöglicht dem Nutzer eine Rufnummernliste zur Verfügung zu stellen, welche über die Freisprechelektronik bzw. deren Schnittstellen nutzbar ist.

Diese Aufgabe wird ausgehend von den Merkmalen des Oberbegriffs des Vorrichtungsanspruchs 1 bzw. des Verfahrensanspruchs 15 durch die kennzeichnenden Merkmale des Anspruchs 1 bzw. 15 gelöst. In den Unteransprüchen sind vorteilhafte und zweckmäßige Weiterbildungen angegeben.

Die erfindungsgemäße Freisprechelektronik für ein Fahrzeug, umfasst wenigstens einen Speicher, in welchem zu den ankommenden und/oder den abgehenden Kommunikationsverbindungen wenigstens jeweils eine Rufnummer oder ein Verweis auf einen außerhalb der Freisprechelektronik liegenden Speicherort der Rufnummer erfasst wird, wobei ein Prozessor der Freisprechelektronik aus Rufnummern der erfassten Kommunikationsverbindungen eine Rufnummernliste generiert, in welcher die Rufnummern der ankommenden und/oder der abgehenden Kommunikationsverbindungen entsprechend ihrer Häufigkeit und/oder entsprechend zusätzlich zur jeweiligen Kommunikationsverbindung erfasster Verbindungsdaten sortiert sind. Mit einer derartigen Freisprecheinrichtung ist es möglich, unabhängig von erweiterten Zugriffsmöglichkeiten der Freisprechelektronik auf das Mobiltelefon eine Rufnummernliste zu generieren, welche in ihrem Aufbau das Telefonverhalten hinsichtlich der eingehenden und/oder ausgehenden Kommunikationsverbindungen abbildet. Kern der Erfindung ist somit eine Freisprechelektronik, welche abhängig von einer Bewertung von Rufnummern eine Rufnummernliste erzeugt. Eine derartige Anrufverwaltung für eine Freisprecheinrichtung bietet eine komfortable Möglichkeit zur Bedienung des Mobiltelefons im Fahrzeug, da aus dem Fahrzeug meist mit einem sehr kleinen Kreis von Teilnehmer kommuniziert wird. Die erfindungsgemäße Freisprechelektronik steuert das angeschlossene Mobiltelefon und ist damit in der Lage, mit Nummern aus ihrer Rufnummernliste selbstständig Gespräche aufzubauen und Gespräche anzunehmen. Dies wird durch eine separate, von der SIM-Karte des Mobiltelefons unabhängige geführte Rufnummernliste ermöglicht, wobei die Rufnummernliste die Teilnehmer enthält, die zum Beispiel oft und regelmäßig angerufen werden. Eine derartige Rufnummernliste ist durch den Benutzer nicht manipulierbar und spiegelt das Wahlverhalten wieder. Wahlwiederholungen, die auf Grund einer nicht aufbaubaren Kommunikationsverbindung durchgeführt werden, beeinflussen die Rufnummernliste nicht.

Unter einer Rufnummernliste wird im Sinne der Erfindung eine Rufnummernliste aus Rufnummern und vorzugsweise diesen zugeordneten Namen verstanden, welche anhand wenigstens eines Sortierkriteriums sortiert ist. Die Rufnummernliste wird auch als Toplist oder Liste bezeichnet.

Unter einer Freisprechelektronik wird im Sinne der Erfindung die Elektronik einer Freisprecheinrichtung verstanden, welche die Koordination aller an die Freisprechelektronik angeschlossener Komponenten wie zum Beispiel Lautsprecher, Mikrofon, Display, Sprachausgabe, Spracheingabe und Multimediaeinrichtung bzw. Audioeinrichtung des Fahrzeugs übernimmt.

Die Erfindung sieht vor, durch die Freisprechelektronik ausschließlich Kommunikationsverbindungen zu erfassen, welche mit Rufnummern stattfinden, die in einem Telefonbuch des Mobiltelefons hinterlegt sind. Über eine derartige Prüfung wird sicher gestellt, dass von der Freisprechelektronik nur Rufnummern erfasst werden, deren Wichtigkeit der Nutzer durch einen Eintrag in das Telefonbuch seines Mobiltelefons dokumentiert hat.

Erfindungsgemäß ist es vorgesehen, im Speicher der Freisprecheinrichtung zumindest vorübergehend außer der zu der Kommunikationsverbindung gehörenden Rufnummer auch Merkmale zu speichern, welche in dem Telefonbuch des Mobiltelefons zu dieser Rufnummer hinterlegt sind und durch die Freisprecheinrichtung derartige Merkmale aus dem Mobiltelefon auszulesen. Somit ist es möglich den Rufnummern automatisch zusätzliche Merkmale zuzuordnen, da diese aus den Einträgen des Telefonbuchs entnommen werden können.

Die Erfindung sieht auch vor, im Speicher der Freisprecheinrichtung zu einer Kommunikationsverbindung auch Verbindungsdaten wie Gesprächszeit und/oder Gesprächsdauer zu erfassen. Hierdurch ist es möglich in der Freisprechelektronik beispielsweise tageszeitabhängige oder wochentagabhängige Rufnummernlisten zu generieren.

Weiterhin sieht die Erfindung vor, der Freisprechelektronik ein Display zuzuordnen, in welchem die generierte Rufnummernliste anzeigbar ist. Hierdurch ist eine besonders einfache Übersicht über mehrere Einträge möglich.

Die Erfindung sieht auch vor, durch die Freisprechelektronik Rufnummernlisten mehrerer Mobiltelefone zu verwalten und dauerhaft zu speichern. Dies ermöglicht die personenbezogene Nutzung einer Freisprechelektronik durch mehrere Nutzer, wobei sich der Nutzer durch sein Mobiltelefon identifiziert.

Gemäß der Erfindung identifiziert die Freisprechelektronik das angeschlossene Mobiltelefon anhand von dessen Rufnummer und/oder von dessen Seriennummer. Hierdurch ist eine eindeutige Zuordnung von gespeicherten Rufnummernlisten zu einem Mobiltelefon möglich.

Weiterhin sieht die Erfindung vor, eine der in der Freisprechelektronik generierten Rufnummernlisten mit einem anderen Mobiltelefon zu verknüpfen. Dies ermöglicht insbesondere bei einem Umstieg auf ein neues Mobiltelefon oder bei einem Wechsel auf eine andere Rufnummer eine Übernahme der bereits bestehenden Rufnummernliste.

Die Erfindung sieht vor, die Freisprechelektronik über eine Funkverbindung mit dem Mobiltelefon zu verbinden. Hierdurch ist die Anbindung des Mobiltelefons besonders einfach.

Alternativ sieht die Erfindung vor, die Freisprechelektronik über ein Kabel mit dem Mobiltelefon zu verbinden. Dies ist dann vorteilhaft, wenn eine besonders manipulationssichere Verbindung zwischen dem Mobiltelefon und der Freisprechelektronik gewünscht ist.

Weiterhin sieht die Erfindung für den Datenaustausch zwischen dem Mobiltelefon und der Freisprechelektronik die Verwendung des sogenannten HANDSFREE-Profils, des sogenannten PHONEBOOK-ACCESS-Profils oder des sogenannten SIM-ACCESS-Profils vor. Diese Profile erlauben wenigstens einen Zugriff auf das auf der SIM-Karte gespeicherte Telefonbuch.

Schließlich sieht die Erfindung ein Verfahren zum Betrieb einer Freisprechelektronik vor, bei welchem die Freisprechelektronik bei jeder ankommenden oder abgehenden Kommunikationsverbindung in einem Telefonbuch des Mobiltelefons überprüft, ob zu der Rufnummer, mit welcher die Kommunikationsverbindung besteht oder bestand, ein Eintrag in dem Telefonbuch vorhanden ist und diese oder einen Verweis auf einen außerhalb der Freisprechelektronik liegenden Speicherort der Rufnummer, wenn ein Eintrag vorhanden ist, in einem Speicher speichert, wobei die Freisprechelektronik aus den in ihrem Speicher zu einer Kommunikationsverbindung gespeicherten Einträgen eine Rufnummernliste generiert, in welcher die Einträge entsprechend ihrer Häufigkeit und/oder entsprechend zusätzlich zur jeweiligen Kommunikationsverbindung erfasster Verbindungsdaten sortiert sind. Mit einem derartigen Verfahren ist es möglich, unabhängig von erweiterten Zugriffsmöglichkeiten der Freisprechelektronik auf das Mobiltelefon eine Rufnummernliste zu generieren, welche in ihrem Aufbau das Telefonverhalten hinsichtlich der eingehenden und/oder ausgehenden Kommunikationsverbindungen abbildet. Kern des Verfahrens ist somit eine Freisprechelektronik, welche abhängig von einem Vorhandensein einer Rufnummer in dem Telefonbuch des Mobiltelefons und abhängig von einer Bewertung von Rufnummern und unabhängig von dem Mobiltelefon eine Rufnummernliste erzeugt.

Ergänzend sieht die Erfindung vor, bei jeder Aktualisierung oder Generierung der Rufnummernliste der Freisprechelektronik die Einträge aus dem Speicher der Freisprechelektronik und die Einträge aus dem Telefonbuch des Mobiltelefons neu zusammenzuführen bzw. miteinander abzugleichen. Hierdurch ist es möglich, mit minimalem Aufwand die Rufnummernliste der Freisprechelektronik an die Aktualität des Telefonbuchs des Mobiltelefons anzupassen.

Weitere Einzelheiten der Erfindung werden in der Zeichnung anhand von schematisch dargestellten Ausführungsbeispielen beschrieben.

Hierbei zeigt:
- Figur 1:: eine erste Ausführungsvariante einer erfindungsgemäßen Freisprechelektronik;
- Figur 2:: eine zweite Ausführungsvariante einer erfindungsgemäßen Freisprechelektronik;
- Figur 3:: eine Darstellung eines ersten Menüinhalts eines Displays;
- Figur 4:: eine Darstellung eines zweiten Menüinhalts eines Displays und
- Figur 5:: ein Flussdiagramm, welches eine Funktionsweise einer erfindungsgemäßen Freisprechelektronik beschreibt.

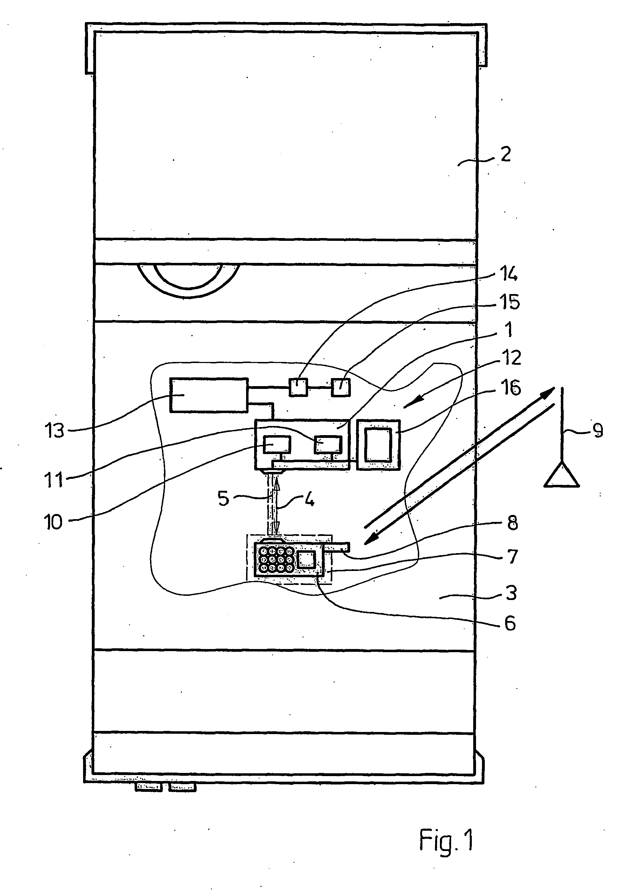

In der Figur 1 ist eine erste Ausführungsvariante einer erfindungsgemäßen Freisprechelektronik 1 dargestellt. Die Freisprechelektronik 1 ist in einem Fahrzeug 2 angeordnet, welches mit einem aufgeschnittenen Dach 3 abgebildet ist. Die Freisprechelektronik 1 ist über eine Funkverbindung 4 oder über ein als Alternative dargestelltes Kabel 5 mit einem Mobiltelefon 6 verbunden. Das Mobiltelefon 6 ist in einer Halterung 7 angeordnet und steht über eine Antenne 8 in Funkverbindung mit einem Telefonnetz, welches durch eine Mobilfunkantenne 9 symbolisiert ist. Die Freisprechelektronik 1 umfasst einen Speicher 10 und einen Prozessor 11. Zur Realisierung einer Freisprecheinrichtung 12 sind mit der Freisprechelektronik 1 neben dem Mobiltelefon 6 auch noch eine Audioanlage 13, welche Lautsprecher 14 und ein Mikrofon 15 umfasst, und ein Display 16 verbunden. Auf dem Display 16 ist eine Liste bzw. Rufnummernliste anzeigbar. Der Speicher 10 der Freisprechelektronik 1 erfasst zu ankommenden und/oder abgehenden Kommunikationsverbindungen wenigstens jeweils eine Rufnummer, wobei der Prozessor 11 der Freisprechelektronik 1 aus Rufnummern der erfassten Kommunikationsverbindungen die Rufnummernliste generiert, welche auf dem Display 16 anzeigbar ist. Bei der Generierung der Rufnummernliste werden die gespeicherten Rufnummern von dem Prozessor 11 entsprechend ihrer Häufigkeit und/oder entsprechend zusätzlich zur jeweiligen Kommunikationsverbindung erfasster Verbindungsdaten sortiert sind. Somit steht beispielsweise die Rufnummer an der obersten Stelle einer Rufnummernliste der abgehenden Kommunikationsverbindungen, welche am häufigsten angewählt wurde. In einer Rufnummernliste der ankommenden Kommunikationsverbindungen steht beispielsweise die Rufnummer an oberster Stelle, unter der am häufigsten angerufen wurde.

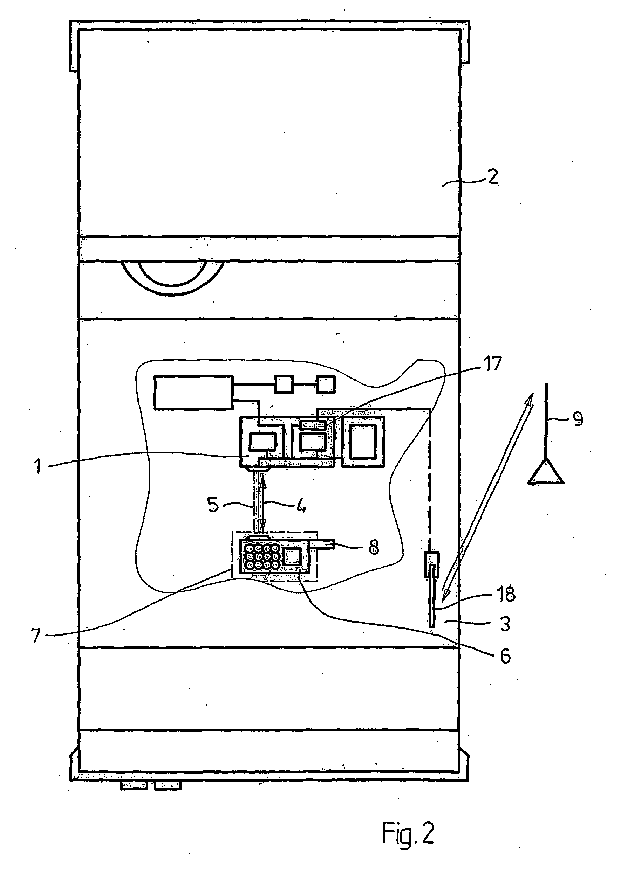

In der Figur 2 ist eine zweite Ausführungsvariante einer erfindungsgemäßen Freisprechelektronik 1 dargestellt. Die Freisprechelektronik 1 ist wieder in einem Fahrzeug 2 angeordnet, welches mit einem aufgeschnittenen Dach 3 abgebildet ist. Die Freisprechelektronik 1 ist über eine Funkverbindung 4 oder über ein als Alternative dargestelltes Kabel 5 mit einem Mobiltelefon 6 verbunden. Das Mobiltelefon 6 ist in einer Halterung 7 angeordnet und steht über eine Antenne 8 nicht in Funkverbindung mit einem Telefonnetz, welches durch eine Mobilfunkantenne 9 symbolisiert ist. Entsprechend dem sogenannten SIM-ACCESS-Profil wird.eine Funkverbindung zu dem Telefonnetz über ein Telefonmodul 17 aufgebaut, welches über eine Außenantenne 18 des Fahrzeugs 2 sendet und empfängt. Bezüglich der übrigen Komponenten und bezüglich der Funktionsweise wird auf die Beschreibung zu der Figur 1 verwiesen.

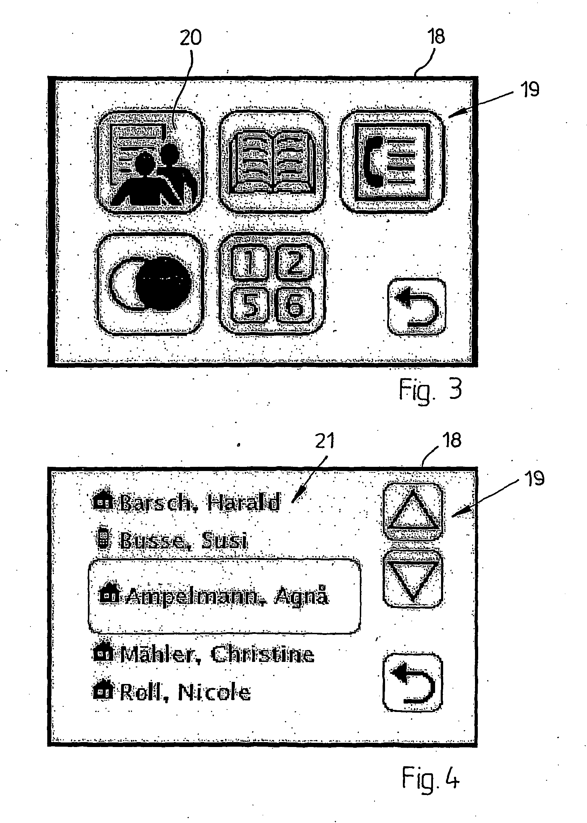

In der Figur 3 ist ein Displayinhalt 19 eines Displays 18 dargestellt, welches an eine hier nicht dargestellte Freisprecheinrichtung angeschlossen ist. Der Displayinhalt 19 umfasst sechs Symbole, wobei über ein links oben angeordnetes Symbol 20 eine.Rufnummernliste anwählbar ist, welche beispielsweise diejenigen Rufnummern bzw. Gesprächspartner umfasst, welche aus dem Fahrzeug häufig angerufen wurden und auch in einem Telefonbuch des Mobiltelefons erfasst sind, wobei die Rufnummernliste entsprechend der Häufigkeit der erfolgreichen Anwahl der Gesprächspartner sortiert ist. Eine solche Rufnummernliste 21 bildet einen Displayinhalt 19 eines in der Figur 4 dargestellten Displays 18. Die Rufnummernliste 21 wird auch mit dem Begriff "Toplist" bezeichnet. Das Display 18 ist beispielsweise als berührungssensitive Anzeigeeinrichtung ausgeführt, um die manuelle Anwahl eines Eintrags der angezeigten Auswahllist zu ermöglichen.

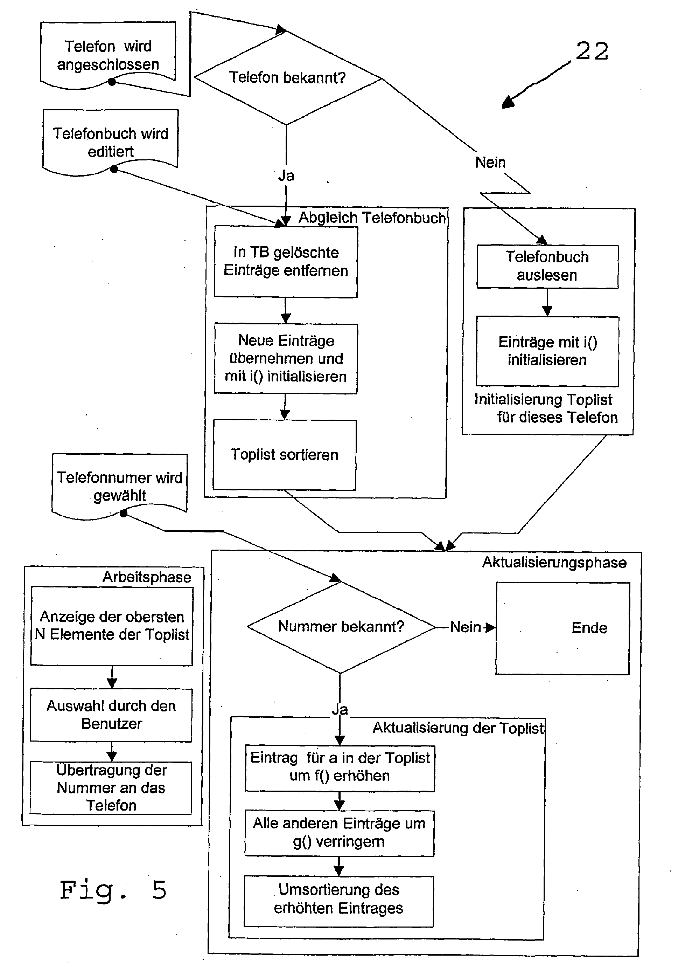

In der Figur 5 ist ein Flussdiagramm 22 abgebildet, welches eine Funktionsweise einer erfindungsgemäßen Freisprechelektronik beschreibt.

In Abhängigkeit eines angeschlossenen Mobiltelefons wird für dessen Telefonbuch in der Freisprechelektronik eine Bewertungsliste verwaltet. Die Freisprechelektronik erkennt das angeschlossene Mobiltelefon und kann für mehrere Mobiltelefone derartige Rufnummernlisten speichern. Beim Einschalten des Mobiltelefons bzw. beim Wechsel des Mobiltelefons wird die Rufnummernliste aktualisiert. Es werden nicht mehr enthaltene Nummern entfernt und neue Nummern mit einem Initialisierungsfaktor (i) aufgenommen. Wird eine Nummer gewählt, die im Telefonbuch des angeschlossenen Mobiltelefons enthalten ist, erhöht sich ihr Gewichtungsfaktor um (f). Aufgrund dieses Gewichtungsfaktors (f) kann eine Sortierung des Telefonbuchs des Mobiltelefons vorgenommen und die obersten N Einträge können dem Benutzer als sogenannte Toplist zum Beispiel auf einem der Freisprechelektronik zugeordneten Display zur weiteren Auswahl angeboten werden. Haben mehrere Einträge die gleiche Bewertung, werden jüngere bevorzugt. Weiterhin werden über eine Vergessensfunktion (g) länger nicht benutzte Nummern abgewertet, sodass die Toplist immer den aktuellen Stand der bevorzugten Gesprächspartner repräsentiert. Jede der zu einem Eintrag im Telefonbuch vorliegende Nummern, zum Beispiel Privatnummer, Büronummer oder Mobilnummer, wird von der Freisprechelektronik getrennt bewertet und behandelt. Die Toplist, welche im Display als Auswahlliste angezeigt wird, wird mit den den Einträgen zugeordneten Namen und einem Symbol für ihre Kategorie markiert. Die Toplist entspricht nicht der sequentiellen Rufnummernliste der gewählten Nummern, wie sie in gängigen Mobiltelefonen realisiert ist, sondern ist eine automatisch generierte Auswahl des Wahlverhaltens des Nutzers im Fahrzeug.

In einer Arbeitsphase werden die obersten N Einträge -.in Abhängigkeit des zur Verfügung stehenden Displays - der Toplist angezeigt und können durch Blättern in der Rufnummernliste und Auswahl direkt als zu wählende Nummer an das Mobiltelefon oder bei Verwendung des SIM-ACCESS-Profils an das Mobiltelefonmodul übertragen werden.

In einer dynamischen Aktualisierungsphase wird eine angewählte Nummer, welche erfolgreich zum Aufbau einer Kommunikationsverbindung geführt hat, unabhängig davon, ob diese bereits aus dem Telefonbuch, einer Wahlwiederholung, einer Auswahl aus einer der Anrufslisten oder aber auch aus der Toplist abgerufen wurde, mit der für das jeweilige Mobiltelefon hinterlegten Rufnummernliste verglichen und der dazugehörige Zähler wird entsprechend erhöht. Ist die Nummer unbekannt, wird sie ignoriert. Es wird angenommen, dass bevorzugte Nummern im Telefonbuch des Mobiltelefons vorhanden sind. Zur Reduzierung des Speicherbedarfs in der Freisprechelektronik und zur optimalen Anpassung der in der Freisprechelektronik generierten Rufnummernliste an das Telefonbuch des Mobiltelefons werden die zugehörigen Namen nicht in der Rufnummernliste gespeichert, sondern aus dem Telefonbuch ausgelesen. Im Speicher der Freisprechelektronik wird nur ein Verweis auf einen außerhalb der Freisprechelektronik liegenden Speicherort der Rufnummer abgelegt, wobei der außerhalb der Freisprechelektronik liegenden Speicherort der Rufnummer beispielsweise die im Mobiltelefon enthaltene SIM-Karte ist.

Werden Nummern aus dem Telefonbuch des Mobiltelefons entfernt, dann werden auch die entsprechenden Zähler gelöscht, neue Nummern werden entsprechend aufgenommen.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung vor in dem Speicher der Freisprechelektronik zu jeder Rufnummer oder jedem Verweis auf einen Speicherort einer Rufnummer mittels eines Zählers die Häufigkeit von deren Verwendung zu erfassen.

### Bezugszeichenliste:

- 1: Freisprechelektronik
- 2: Fahrzeug
- 3: Dach von 2
- 4: Funkverbindung zwischen 1 und 6
- 5: Kabel zwischen 1 und 6
- 6: Mobiltelefon
- 7: Halterung für 6
- 8: Antenne von 6
- 9: Mobilfunkantenne
- 10: Speicher in 1
- 11: Prozessor in 1
- 12: Freisprecheinrichtung
- 13: Audioanlage
- 14: Lautsprecher
- 15: Mikrofon
- 16: Display
- 17: Telefonmodul
- 18: Außenantenne von 2
- 19: Displayinhalt von 16
- 20: Symbol
- 21: Rufnummernliste, Liste, Toplist
- 22: Flussdiagramm

## Patentansprüche

1. Freisprechelektronik (1) für ein Fahrzeug (2), wobei die Freisprechelektronik (1) mit einem Mobiltelefon (6) verbunden ist und wobei durch die Freisprechelektronik (1) über das Mobiltelefon (6) ankommende und/oder abgehende Kommunikationsverbindungen herstellbar sind, **dadurch gekennzeichnet, dass** die Freisprechelektronik (1) wenigstens einen Speicher (10) umfasst, in welchem zu den ankommenden und/oder den abgehenden Kommunikationsverbindungen wenigstens jeweils eine Rufnummer oder ein Verweis auf einen außerhalb der Freisprechelektronik (1) liegenden Speicherort der Rufnummer erfasst wird, wobei ein Prozessor (11) der Freisprechelektronik (1) aus Rufnummern der erfassten Kommunikationsverbindungen eine Rufnummernliste (21) generiert, in welcher die Rufnummern der ankommenden und/oder der abgehenden Kommunikationsverbindungen entsprechend ihrer Häufigkeit und/oder entsprechend zusätzlich zur jeweiligen Kommunikationsverbindung erfasster Verbindungsdaten sortiert sind.

2. Freisprechelektronik nach Anspruch 1, **dadurch gekennzeichnet, dass** die Freisprechelektronik (1) ausschließlich Kommunikationsverbindungen erfasst, welche mit Rufnummern stattfinden, die in einem Telefonbuch des Mobiltelefons (6) hinterlegt sind.

3. Freisprechelektronik nach einem der vorhergehenden Ansprüche, **dadurch gekennzeichnet, dass** die Freisprecheinrichtung (1) in ihrem Speicher (10) zumindest vorübergehend außer der zu der Kommunikationsverbindung gehörenden Rufnummer auch Merkmale speichert, welche in dem Telefonbuch des Mobiltelefons (6) zu dieser Rufnummer hinterlegt sind, und dass die Freisprecheinrichtung (1) derartige Merkmale aus dem Telefonbuch des Mobiltelefons (6) ausliest.

4. Freisprechelektronik nach einem der vorhergehenden Ansprüche, **dadurch gekennzeichnet, dass** im Speicher (10) der Freisprecheinrichtung (1) zu einer Kommunikationsverbindung auch Verbindungsdaten wie Gesprächszeit und/oder Gesprächsdauer erfasst werden.

5. Freisprechelektronik nach einem der vorhergehenden Ansprüche, **dadurch gekennzeichnet, dass** der Freisprechelektronik (1) ein Display (16) zugeordnet ist, in welchem die generierte Rufnummernliste (21) anzeigbar ist.

6. Freisprechelektronik nach einem der vorhergehenden Ansprüche, **dadurch gekennzeichnet, dass** durch die Freisprechelektronik (1) Rufnummernlisten (21) von wenigstens zwei Mobiltelefonen (6) verwaltbar und dauerhaft speicherbar sind.

7. Freisprechelektronik nach einem der vorhergehenden Ansprüche, **dadurch gekennzeichnet, dass** die Freisprechelektronik (1) das angeschlossene Mobiltelefon (6) durch dessen Rufnummer und/oder dessen Seriennummer identifiziert.

8. Freisprechelektronik nach einem der vorhergehenden Ansprüche, **dadurch gekennzeichnet, dass** eine der in der Freisprechelektronik (1) generierten Rufnummernlisten (21) mit einem anderen Mobiltelefon (6) verknüpfbar ist.

9. Freisprechelektronik nach einem der vorhergehenden Ansprüche, **dadurch gekennzeichnet, dass** die Freisprechelektronik (1) über eine Funkverbindung (4) mit dem Mobiltelefon (6) verbunden ist.

10. Freisprechelektronik nach einem der vorhergehenden Ansprüche, **dadurch gekennzeichnet, dass** die Freisprechelektronik (1) über ein Kabel (5) mit dem Mobiltelefon (6) verbunden ist.

11. Freisprechelektronik nach einem der vorhergehenden Ansprüche, **dadurch gekennzeichnet, dass** die Freisprechelektronik (1) mit dem Mobiltelefon (6) über ein sogenanntes HANDSFREE-Profil Daten austauscht.

12. Freisprechelektronik nach einem der vorhergehenden Ansprüche, **dadurch gekennzeichnet, dass** die Freisprecheinrichtung (1) mit dem Mobiltelefon (6) über ein sogenanntes PHONEBOOK-ACCESS-Profil Daten austauscht.

13. Freisprechelektronik nach einem der vorhergehenden Ansprüche, **dadurch gekennzeichnet, dass** die Freisprecheinrichtung (1) mit dem Mobiltelefon (6) über ein sogenanntes SIM-ACCESS-Profil Daten austauscht.

14. Freisprechelektronik nach einem der vorhergehenden Ansprüche, **dadurch gekennzeichnet, dass** die Funkverbindung (4) zwischen der Freisprechelektronik (1) und dem Mobiltelefon (6) als sogenannte BT-Verbindung nach dem BlueTooth-Standard ausgeführt ist.

15. Verfahren zum Betrieb einer Freisprechelektronik (1), welche mit einem Mobiltelefon (6) verbunden ist, **dadurch gekennzeichnet, dass** die Freisprechelektronik (1) bei jeder ankommenden oder abgehenden Kommunikationsverbindung in einem Telefonbuch des Mobiltelefons (6) überprüft, ob zu der Rufnummer, mit welcher die Kommunikationsverbindung besteht oder bestand, ein Eintrag in dem Telefonbuch vorhanden ist und die Rufnummer oder einen Verweis auf einen außerhalb der Freisprechelektronik (1) liegenden Speicherort der Rufnummer, sofern ein Eintrag vorhanden ist, in einem Speicher (10) speichert, wobei die Freisprechelektronik (1) aus den in ihrem Speicher (10) gespeicherten Einträgen eine Rufnummernliste (21) generiert, in welcher die Einträge entsprechend ihrer Häufigkeit und/oder entsprechend zusätzlich zur jeweiligen Kommunikationsverbindung erfasster Verbindungsdaten sortiert sind.

16. Verfahren nach Anspruch 15, **dadurch gekennzeichnet, dass** bei jeder Aktualisierung oder Generierung der Rufnummernliste (21) die Einträge aus dem Speicher (10) der Freisprechelektronik (1) und die Einträge aus dem Telefonbuch des Mobiltelefons (6) erneut zusammengeführt bzw. abgeglichen werden.

## Claims

1. Hands-free electronic device (1) for a motor vehicle (2), wherein the hands-free electronic device (1) is connected to a mobile phone (6), and wherein incoming and/or outgoing communication connections can be established by the hands-free electronic device (1) via the mobile phone (6), **characterised in that** the hands-free electronic device (1) comprises at least one memory (10), in which at least one call number or reference to a storage location of the call number located outside the hands-free electronic device (1) is established for incoming and/or outgoing communication connections, wherein a processor (11) of the hands-free electronic device (1) generates from call numbers of the established communication connections a call number list (21), in which the call numbers of incoming and/or outgoing communication connections are sorted according to their frequency of use and/or also according to connection data collected for the respective communication connection.

2. Hands-free electronic device according to claim 1, **characterised in that** the hands-free electronic device (1) establishes exclusively call numbers of communication connections which are stored in a directory of the mobile phone (6).

3. Hands-free electronic device according to one of the preceding claims, **characterised in that** the hands-free device (1) stores in its memory (10) at least temporarily and separately from the call numbers of the communication connection features, which are stored for the call number in the directory of the mobile phone (6), and **in that** the hands-free device (1) reads such features from the directory of the mobile phone (6).

4. Hands-free electronic device according to one of the preceding claims, **characterised in that** the memory (10) of the hands-free device (1) also collects connection data such as time and/or duration of call for a communication connection.

5. Hands-free electronic device according to one of the preceding claims, **characterised in that** a display (16) for displaying the generated call number list (21) is allocated to the hands-free electronic device (1).

6. Hands-free electronic device according to one of the preceding claims, **characterised in that** call number lists (21) of at least two mobile phones (6) can be administered and permanently stored in the hands-free electronic device (1).

7. Hands-free electronic device according to one of the preceding claims, **characterised in that** the hands-free electronic device (1) identifies the connected mobile phone (6) by its call number and/or its serial number.

8. Hands-free electronic device according to one of the preceding claims, **characterised in that** one of the call number lists (21) generated in the hands-free electronic device (1) can be connected to another mobile phone (6).

9. Hands-free electronic device according to one of the preceding claims, **characterised in that** the hands-free electronic device (1) is connected to the mobile phone (6) via a radio link (4).

10. Hands-free electronic device according to one of the preceding claims, **characterised in that** the hands-free electronic device (1) is connected to the mobile phone (6) via a cable (5).

11. Hands-free electronic device according to one of the preceding claims, **characterised in that** the hands-free electronic device (1) exchanges data with the mobile phone (6) via a so-called HANDSFREE profile.

12. Hands-free electronic device according to one of the preceding claims, **characterised in that** the hands-free device (1) exchanges data with the mobile phone (6) via a so-called PHONEBOOK ACCESS profile.

13. Hands-free electronic device according to one of the preceding claims, **characterised in that** the hands-free device (1) exchanges data with the mobile phone (6) via a so-called SIM ACCESS profile.

14. Hands-free electronic device according to one of the preceding claims, **characterised in that** the radio connection (4) between the hands-free electronic device (1) and the mobile phone (6) is a so-called BT-connection according to the Bluetooth standard.

15. Method for operating a hands-free electronic device (1) which is connected to a mobile phone (6), **characterised in that** the hands-free electronic device (1) checks in a phone book of the mobile phone (6) with each incoming or outgoing communication connection, whether for the call number, with which the communication connection exists or existed, there is an existing entry in the mobile phone directory, and stores in a memory (10) the call number or a reference to a memory location of the call number outside the hands-free electronic device (1), provided an entry exists, wherein the hands-free electronic device (1) generates a call number list (21) from the entries stored in its memory (10), in which list the entries are sorted according to their frequency of use and/or according to connection data established in addition for the respective communication connection.

16. Method according claim 15, **characterised in that** the entries stored in the memory (10) of the hands-free electronic device (1) and the entries from the directory of the mobile phone (6) are again combined and/or compared upon each update or generation of the call number list (21).

## Revendications

1. Dispositif électronique de conversation mains libres (1) pour un véhicule automobile (2) dans lequel,
ce dispositif électronique (1) est relié à un téléphone mobile (6) et il établit des liaisons de communication en entrée/ en sortie par le téléphone mobile (6),
**caractérisé en ce que**
le dispositif électronique de conversation mains libres (1) comporte au moins une mémoire (10) dans laquelle on saisit, pour les liaisons de communication d'entrée et/ou de sortie, au moins chaque fois un numéro d'appel ou une indication concernant un emplacement de mémoire du numéro d'appel situé à l'extérieur du dispositif électronique de conversation mains libres (1),
un processeur (11) du dispositif électronique de conversation mains libres (1) génère une liste de numéros d'appel (21) à partir des numéros d'appel des liaisons de communication saisis, liste dans laquelle les numéros d'appel des liaisons de communication d'entrée et/ou de sortie sont classés en fonction de leur fréquence et/ou d'au moins une donnée de liaison saisie en plus pour chaque liaison de communication.

2. Dispositif électronique de conversation mains libres selon la revendication 1,
**caractérisé en ce que**
le dispositif électronique de conversation mains libres (1) saisit exclusivement les liaisons de communication produites avec des numéros d'appel enregistrés dans un agenda du téléphone mobile (6).

3. Dispositif électronique de conversation mains libres selon l'une des revendications précédentes,
**caractérisé en ce que**
le dispositif de conversation mains libres (1) mémorise dans sa mémoire (10) au moins provisoirement, non seulement le numéro d'appel correspondant à la liaison de communication mais aussi des caractéristiques enregistrées dans l'agenda du téléphone mobile (6) pour ce numéro d'appel, et
le dispositif de conversation mains libres (1) extrait de telles caractéristiques de l'agenda du téléphone mobile (6).

4. Dispositif électronique de conversation mains libres selon l'une des revendications précédentes,
**caractérisé en ce qu'**
il saisit également, dans la mémoire (10) du dispositif de conversation mains libres (1), en plus de la communication téléphonique, les données de la communication telles que le moment de la conversation et/ou sa durée.

5. Dispositif électronique de conversation mains libres selon l'une des revendications précédentes,
**caractérisé en ce que**
le dispositif électronique de conversation mains libres (1) comporte un afficheur (16) affichant la liste des numéros d'appel (21), générée.

6. Dispositif électronique de conversation mains libres selon l'une des revendications précédentes,
**caractérisé en ce que**
le dispositif électronique de conversation mains libres (1) permet de sélectionner les listes de numéros d'appel (21) d'au moins deux téléphones mobiles (6) et de les mémoriser de manière permanente.

7. Dispositif électronique de conversation mains libres selon l'une des revendications précédentes,
**caractérisé en ce que**
le dispositif électronique de conversation mains libres (1) identifie le téléphone mobile (6), raccordé, par son numéro d'appel et/ou son numéro de série.

8. Dispositif électronique de conversation mains libres selon l'une des revendications précédentes,
**caractérisé en ce que**
l'une des listes de numéros d'appel (21) générée dans le dispositif électronique de conversation mains libres (1) est combinée à un autre téléphone mobile (6).

9. Dispositif électronique de conversation mains libres selon l'une des revendications précédentes,
**caractérisé en ce que**
le dispositif électronique de conversation mains libres (1) est relié par une liaison radio (4) au téléphone mobile (6).

10. Dispositif électronique de conversation mains libres selon l'une des revendications précédentes,
**caractérisé en ce que**
le dispositif électronique de conversation mains libres (1) est relié au téléphone mobile (6) par un câble (5).

11. Dispositif électronique de conversation mains libres selon l'une des revendications précédentes,
**caractérisé en ce que**
le dispositif électronique de conversation mains libres (1) échange des données de profil « mains libres » par le téléphone mobile (6).

12. Dispositif électronique de conversation mains libres selon l'une des revendications précédentes,
**caractérisé en ce que**
le dispositif électronique de conversation mains libres (1) échange avec le téléphone mobile (6) des données par un profil PHONEBOOK-ACCESS.

13. Dispositif électronique de conversation mains libres selon l'une des revendications précédentes,
**caractérisé en ce que**
le dispositif électronique de conversation mains libres (1) échange des données avec le téléphone mobile (6) par un profil SIM-ACCESS.

14. Dispositif électronique de conversation mains libres selon l'une des revendications précédentes,
**caractérisé en ce que**
la liaison radio (4) entre le dispositif électronique de conversation mains libres (1) et son téléphone mobile (6) se fait par une liaison BT selon la norme Bluetooth.

15. Procédé de gestion d'un dispositif électronique de conversation mains libres (1), relié à un téléphone mobile (6),
**caractérisé en ce que**
le dispositif électronique de conversation mains libres (1) vérifie pour chaque liaison de communication d'entrée et de sortie dans un agenda téléphonique du téléphone mobile (6) si, pour le numéro d'appel avec lequel il y a ou il y a eu une liaison de communication, il existe un enregistrement dans l'agenda téléphonique et il enregistre dans la mémoire (10) le numéro d'appel ou une indication concernant l'emplacement de mémoire pour le numéro d'appel à l'extérieur du dispositif électronique de conversation mains libres (1), dans la mesure où il y a un enregistrement, le dispositif électronique de conversation mains libres (1) générant à partir des enregistrements mémorisés dans sa mémoire (10), une liste de numéros d'appel (21) dans laquelle sont classés les enregistrements en fonction de leur fréquence et/ou en plus des données de liaison saisies pour chaque liaison de communication.

16. Procédé selon la revendication 15,
**caractérisé en ce que**
pour chaque actualisation ou chaque fois que la liste des numéros d'appel (21) est générée, on assemble ou on compense de nouveau les enregistrements de la mémoire (10) du dispositif électronique de conversation mains libres (1) et les entrées provenant de l'agenda téléphonique du téléphone mobile (6).
